(19)

Europäisches
Patentamt
European
Patent Office
Office européen
des brevets

(11) **EP 3 483 803 A1**

(12) **EUROPEAN PATENT APPLICATION**

(43) Date of publication:
**15.05.2019 Bulletin 2019/20**

(51) Int Cl.:
**G06Q 10/04** *(2012.01)*   **G06Q 50/02** *(2012.01)*
**G06Q 10/06** *(2012.01)*

(21) Application number: **18193719.4**

(22) Date of filing: **11.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2017 US 201715810223**

(71) Applicant: **GE Energy Power Conversion Technology Ltd.**
**Warwickshire CV21 1BU (GB)**

(72) Inventors:
• **JOHNSON, David Edmund**
  **Houston, TX Texas 77041 (US)**
• **GRAY, Stuart**
  **Houston, TX Texas 77041 (US)**
• **UPPULURI, Krishna**
  **San Ramon, CA California 94583 (US)**

(74) Representative: **Serjeants LLP**
**Dock**
**75 Exploration Drive**
**Leicester, LE4 5NU (GB)**

(54) **MAINTENANCE OPTIMIZATION SYSTEM THROUGH PREDICTIVE ANALYSIS AND USAGE INTENSITY**

(57)    Provided is a method and system (100) that includes a plurality of computing modules (110, 120, 130) each configured to (i) retrieve maintenance history and equipment parameters associated with a plurality of equipment components from at least one network (50, 55, 60, 65) and process the maintenance history, (ii) calculate usage intensity based on the maintenance history and equipment parameters, and (iii) create modified maintenance schedules of the plurality of equipment components based on the maintenance history and usage intensity calculated.

FIG. 1B

Printed by Jouve, 75001 PARIS (FR)

## Description

I. Technical Field

The present invention relates generally to performing equipment maintenance optimization. In particular, the present invention relates to performing offshore industrial equipment maintenance optimization through predictive analysis and usage intensity (UI).

II. Background

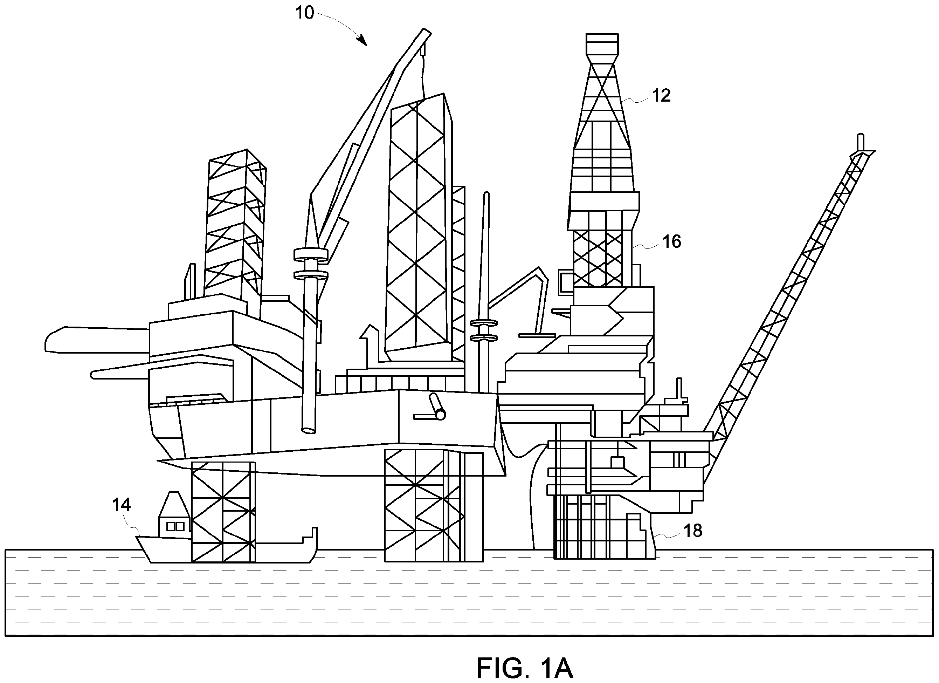

Traditional practices for maintaining industrial equipment systems usually include conducting regularly scheduled calendar-based preventative maintenance activities. An example of one such system is an offshore oil platform 10, illustrated in FIG. 1A.

The offshore oil platform 10 is an integrated system, including a drilling system 12, and marine vessels 14. The drilling system 12, includes various industrial equipment components, such as a drive train 16, blow out preventers (BOPs) 18, along with various management and control networks. Various other components - mud pumps, elevator systems, power systems, dollies, goose necks etc., are also industrial components within the integrated oil platform 10.

Given the remote and highly specialized nature of systems, such as the offshore oil platform 10, system maintenance can be very costly and difficult. One traditional cost containment and maintenance reduction approach combines the scheduled calendar based preventive maintenance, noted above, with limited amounts of required maintenance. In this approach, the required maintenance is performed after a specific number of hours run.

Although marginally effective, these traditional practices do not account for actual equipment conditions nor how extensively the equipment has been used over previous maintenance cycles. As a result, excessive and unnecessary maintenance can be performed on underutilized equipment, or equipment that has not been heavily utilized. At the same time, maintenance is not scheduled for equipment already exhibiting operational or performance anomalies, or in the process of actually failing.

III. Summary of the Embodiments

Given the aforementioned deficiencies, needed is a system and method for performing maintenance scheduling for offshore industrial equipment (e.g., motors, transformers etc.) within a maintenance network by monitoring associated equipment parameters and utilizing predictive maintenance modeling processes to detect signs of imminent equipment failure.

What is also needed are computerized maintenance systems capable of interfacing directly with existing preventative maintenance tracking systems. These computerized systems can postpone scheduled maintenance when it's not needed or the equipment is only occasionally used. Alternatively, maintenance schedules can be accelerated when anomalies, or other data, predict imminent equipment failure.

In embodiments of the present invention, a maintenance tracking system is provided. The system includes a plurality of computing modules each configured to (i) retrieve maintenance history and equipment parameters associated with a plurality of equipment from at least one network and process the maintenance history, (ii) calculate usage intensity (UI) based on the maintenance history and equipment parameters, and (iii) create modified maintenance schedules of the plurality of equipment based on the maintenance history and UI calculated.

In embodiments of the present invention, a system for predicting maintenance on a plurality of equipment components is provided. The system includes a plurality of computing modules configured to (i) retrieve maintenance history and equipment parameters associated with the industrial equipment components from at least one equipment network, and process the maintenance history, (ii) calculate UI based on the maintenance history and equipment parameters, and (iii) create modified maintenance schedules of the plurality of equipment components based on the maintenance history and the UI.

The equipment parameters may comprise one or more of analog values, temperature or pressure values, control signals, reference speed and feedback signals of the plurality of equipment components.

The system may further include a storage in communication with the computing modules and configured to store historical data obtained and UI data calculated by the computing modules, and a software application module configured to retrieve and control performance of the modified maintenance schedules.

The storage and the software application module may be remotely located from the plurality of computing modules and the at least one equipment network.

Each computing module may include an internal memory configured to store instructions, at least one processor configured to receive the instructions from the internal memory and perform steps (i), (ii) and (iii) by the plurality of computing modules.

The modified maintenance schedules created may include a maintenance task timeline including a total of maintenance tasks for the equipment network, and a selected item task including maintenance for a specific piece of equipment of the plurality of equipment components.

The at least one processor of one computing module of the plurality of computing modules may be further configured to (i) perform a skip shift operation to determine when to extend existing maintenance tasks of the plurality of equipment components on the equipment network, wherein the skip shift operation comprises determining maintenance extension using historical maintenance data of the plurality of equipment components and skipping routine scheduled maintenance based on the historical maintenance data, and (ii) retrieving maintenance data in real-time regarding the plurality of equipment components on the at least one equipment network via a computing module of the plurality of computing modules, performing analytics using machine learning processes and shifting a maintenance schedule of the plurality of equipment components based on the analytics.

The modified maintenance schedules may be displayed and controlled via a user display.

The modified maintenance schedules may include maintenance benefit information including UI information and predictive alerts.

In embodiments of the present invention, a method for predicting maintenance of a plurality of equipment components on an equipment network is provided. The method includes retrieving at a first computing module, maintenance history and equipment parameters associated with the plurality of equipment components from the equipment network and processing the maintenance history, calculating at a second computing module, a usage intensity factor (UIF) based on the maintenance history and values of the equipment parameter, and creating at a third computing module, modified maintenance schedules of the plurality of equipment components based on the maintenance history and the UIF.

The equipment parameters may include one or more of analog values, temperature or pressure values, control signals, reference speed and feedback signals of the plurality of equipment components.

The method may further include storing the maintenance history and UIF, and retrieving and controlling the modified maintenance schedules via a software application module in communication with the first computing module, the second computing module and the third computing module.

The method may further include performing, at the third computing module, a skip shift operation to determine when to extend existing maintenance tasks of the plurality of equipment components on the equipment network.

The skip shift operation may include determining maintenance extension using historical maintenance data of the plurality of equipment components and skipping routine scheduled maintenance based on the historical maintenance data, and retrieving maintenance data in real-time regarding the plurality of equipment components on the at least one equipment network via the first computing module, and performing analytics using machine learning processes and shifting a maintenance schedule of the plurality of equipment components based on the analytics.

The method may further include displaying, at a user display, the modified maintenance schedules.

The method may further include displaying at the user display, maintenance benefit information including usage intensity information and predictive alerts.

In embodiments of the present invention, a computer implemented equipment maintenance optimization system for one or more target assets (TA) is provided comprising: history sensors, configured to detect and transmit maintenance history data from the TA; usage intensity sensors, configured to detect and transmit wear or usage data from the TA; a computer server-system, comprising an historian processor, a usage intensity analytics engine, and a control processor; communications interface means, operatively coupled to said sensors and server-system; first logic means for performing smart signal predicative analytics (SSPA) computations using received and stored model history data; second logic means for performing usage intensity factor analytics (UIFA) computations using received and model wear data; logical means for combining information from the firs logic means and the second logic means to determine whether maintenance events should take place at previously scheduled times, moved forward in time, or moved back to later times; and server-system logic means for calculating maintenance effectiveness, and for tracking and displaying maintenance status; whereby equipment maintenance can be optimally extended when TA is lightly used or brought forward when anomalies indicate imminent failure of the TA.

The foregoing has broadly outlined some of the aspects and features of various embodiments, which should be construed to be merely illustrative of various potential applications of the disclosure. Other beneficial results can be obtained by applying the disclosed information in a different manner or by combining various aspects of the disclosed embodiments. Accordingly, other aspects and a more comprehensive understanding may be obtained by referring to the detailed description of the exemplary embodiments taken in conjunction with the accompanying drawings, in addition to the scope defined by the claims.

IV. DESCRIPTION OF THE DRAWINGS

The drawings are only for purposes of illustrating preferred embodiments and are not to be construed as limiting the disclosure. Given the following enabling description of the drawings, the novel aspects of the present disclosure should become evident to a person of ordinary skill in the art. This detailed description uses numerical and letter designations to refer to features in the drawings. Like or similar designations in the drawings and description have been used to refer to like or similar parts of embodiments of the invention.

FIG. 1A illustrates an offshore oil platform, in which embodiments of the present invention can be practiced.

FIG. 1B illustrates a tracking system for maintaining a plurality of industrial equipment systems on at least one network, in accordance with one or more embodiments of the present invention.

FIG. 2 illustrates a computing module of the system of FIG. 1B.

FIG. 3 illustrates an example of a modified maintenance schedule generated within the system of FIG. 1B.

FIG. 4 illustrates a skip and shift process of the system of FIG. 1B that can be implemented within the embodiments.

FIG. 5 illustrates maintenance histories of the plurality of plurality of equipment systems and maintenance benefits to be displayed to a user of the system of FIG. 1B.

FIG. 6 illustrates exemplary recordkeeping and reporting of effectiveness of modified maintenance schedules.

FIG. 7 illustrative a method for performing maintenance optimization through predictive analysis and usage intensity (UI).

FIG. 8 is a high level overview of maintenance optimization of a particular target asset.

FIG. 9 is a flowchart for smart signal predictive analytics (SSPA) according to an embodiment.

FIG. 10 is flowchart for a usage intensity factor analytics (UIFA) determination embodiment.

FIGs. 11A, 11B, and FIG. 12 illustrate exemplary UIFA calculation methods for very simple, simple, and complex apparatuses respectively.

FIG. 13 illustrates an exemplary overview diagram of maintenance rescheduling.

FIG. 14 is a graphical illustration correlating length of time and revolutions to wear.

FIG. 15 is an exemplary table including example mud flow rates.

FIG. 16A is a diagram illustrating an example of a maintenance timeline showing calendar scheduled maintenance vs. advanced maintenance vs extended maintenance.

FIG. 16B is a flowchart illustrating an example of skip & shift methodology, according to the embodiments.

FIG. 17 lists exemplary skip & shift methodology parameters.

FIG. 18 illustrates maintenance effectiveness analytics.

FIGs. 19A and 19B illustrate potential analytics combinations to drive data-driven predictive maintenance schedules.

## V. DETAILED DESCRIPTION OF THE EMBODIMENTS

As required, detailed embodiments are disclosed herein. It must be understood that the disclosed embodiments are merely exemplary of various and alternative forms. As used herein, the word "exemplary" is used expansively to refer to embodiments that serve as illustrations, specimens, models, or patterns. The figures are not necessarily to scale and some features may be exaggerated or minimized to show details of particular components.

In other instances, well-known components, apparatuses, materials, or methods that are known to those having ordinary skill in the art have not been described in detail in order to avoid obscuring the present disclosure. Therefore, specific structural and functional details disclosed herein are not to be interpreted as limiting, but merely as a basis for the claims and as a representative basis for teaching one skilled in the art.

As noted above, the embodiments provide a method and maintenance tracking system for performing maintenance scheduling for offshore industrial equipment (e.g., motors, transformers) within a maintenance network. This maintenance is performed by monitoring associated equipment parameters and utilizing similarity-based modeling processes to detect signs of imminent equipment failure.

The system described herein interfaces with existing equipment networks via a communication network. By way of example, the communication network can be WiFi, Internet, Bluetooth, 802.11, 802.15, cellular, or other computer networks. The maintenance system, according to embodiments of the present invention, interface directly with existing maintenance software systems well known to those of skill in the art.

Systems constructed in accordance with the embodiments generate additional maintenance and inspection tasks to resolve potentially problematic issues before they produce failures. As a result, this approach reduces costly repairs and unplanned downtime by calculating usage intensity (UI) for each equipment component or subsystem. The UI calculated assist with determining postponement of maintenance for lightly loaded equipment when downtime for maintenance is not required, resulting in extended equipment availability and overall reduced maintenance costs. The system of the embodiments can be implemented within existing marine and offshore equipment systems, and drilling ships. The system can also be implemented within any industrial plant power stations or other complex equipment systems.

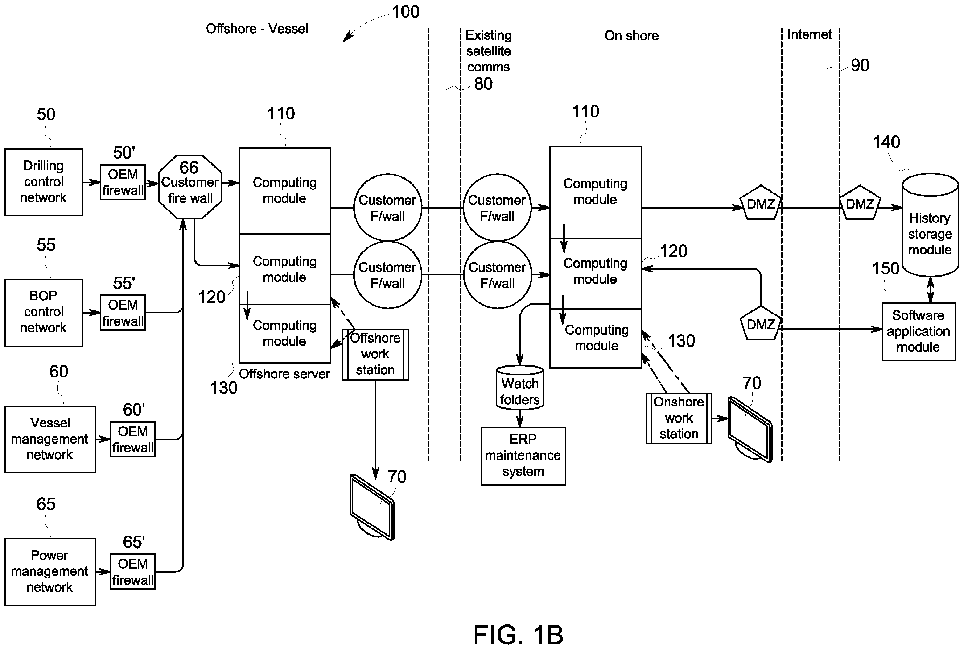

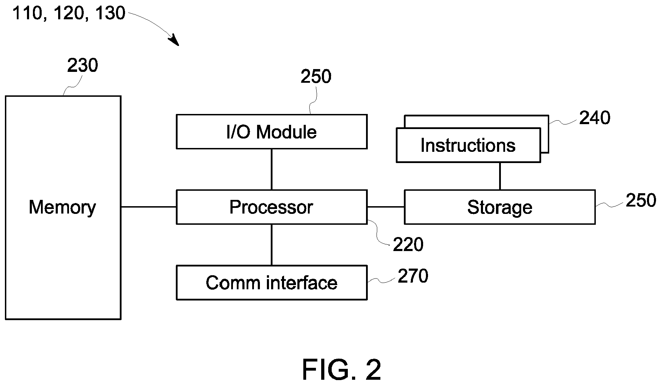

The embodiments will now be discussed with reference to FIGs. 1B and 2. FIG. 1B illustrates a tracking system 104 for maintaining a plurality of industrial equipment components on at least one network, according to the embodiments.

The system 100 of the present invention will be described in reference to an offshore vessel, for illustrative purposes only. As shown in FIG. 1B, the system 100 includes a plurality of computing modules 110, 120, and 130 in communication with a plurality of equipment networks 50, 55, 60, and 65. The system 100 further includes a storage database 140 and software application module 150 in communication with the computing modules 110 and 120.

By way of example only, and not limitation, the equipment networks 50, 55, 60, and 65 can include networks associated with drilling, BOP control, vessel management, and power management, respectively.

The computing modules 110, 120, and 130 can be virtual machines included within a single server, or single stand-alone servers or computing devices. In the example of FIG. 1B, the computing module 110 retrieves maintenance history data and equipment parameters associated with the plurality of industrial equipment systems associated via the networks 50, 55, 60, and 65.

As an example, the equipment parameters can include analog values such as temperature or pressure values, control signals, reference speeds, powers, torques and other feedback signals such as open/closed statuses, running stopped statuses, to name a few. The computing module 110 will process the maintenance history data input from the plurality of equipment systems.

The information received via the networks 50, 55, 60, and 65 passes through respective network firewalls 50', 55', 60', and 65' before being input to the computing module 110. Also included in the example of FIG. 1B is an optional customer firewall 66. The computing module 120 is configured to calculate a UI factor based on processed received maintenance history data and equipment parameter values output from the computing module 110.

The computing module 130 is configured to create modified maintenance schedules of the plurality of equipment based on the maintenance history and UI calculated via computing modules 110, 120, and 130. The modified maintenance schedules can be displayed via a user interface (e.g., a computer display 70).

As shown in FIG. 1B, in accordance with one embodiment, the networks 50, 55, 60 and 65 and the computing modules 110, 120, and 130 can be located offshore on a vessel and a second set of computing modules 110, 120, and 130 can be disposed onshore in a remote location for further analysis. The computing modules 110, 120, and 130 offshore can communicate with the computing modules 110, 120, and 130 onshore via an existing satellite communication network 80.

Functions performed by the computing modules 110, 120, and 130 onshore are substantially identical to the functions performed by the computing modules 110, 120, and 130 offshore. The resulting modified maintenance schedules can also be displayed on an onshore user interface 70. The information can be sent to the storage module 140 and viewed and controlled via the software application module 150 at a user device. The information sent to the storage module 140 and the software application module 150 can first go through a demilitarized zone (DMZ) or additional firewalls.

According to one or more embodiments, the storage module 140 and the software application module 150 can be located at an industrial performance and reliability center (IPRC) and information is retrieved from the computing modules 110, 120, and 130 onshore via a communication network 90 such as the Internet.

Each computing module 110, 120, and 130 each can be a computing device as shown in FIG. 2 that includes a processor 220 with a specific structure. The specific structure is imparted to the processor 220 by instructions stored in an internal memory 230 included therein. The structure can also be imparted by instructions 240 that can be fetched by the processor 220 from a storage medium 250. The storage medium 250 may be co-located with the computing module 110, 120, and 130 as shown, or it may be located elsewhere and be communicatively coupled to the respective computing module 110, 120, and 130.

The computing modules 110, 120, and 130 each may include one or more hardware and/or software components configured to fetch, decode, execute, store, analyze, distribute, evaluate, diagnose, and/or categorize information. Furthermore, the computing modules 110, 120, and 130 can each include an input/output (I/O) module 260 that can be configured to interface with each other and with the external networks.

The processor 220 may include one or more processing devices or cores (not shown). In some embodiments, the processor 220 can be a plurality of processors, each having either one or more cores. The processor 220 can be configured to execute instructions fetched from the memory 230, or the instructions may be fetched from storage medium 250, or from a remote device connected to computing device via a communication interface 270.

Furthermore, without loss of generality, the storage medium 250 and/or the memory 230 may include a volatile or non-volatile, magnetic, semiconductor, tape, optical, removable, non-removable, read-only, random-access, or any type of non-transitory computer-readable computer medium. The storage medium 250 and/or the memory 230 may include programs and/or other information that may be used by the processor 220.

Moreover, the storage medium 250 may be configured to log data processed, recorded, or collected during the operation of the computing modules 110, 120, or 130. For example, the storage medium 250 may store the historical data, calculated UI data, and created modified maintenance schedule data at the respective computing modules 110, 120, and 130. The data may be time-stamped, location-stamped, cataloged, indexed, or organized in a variety of ways consistent with data storage practice.

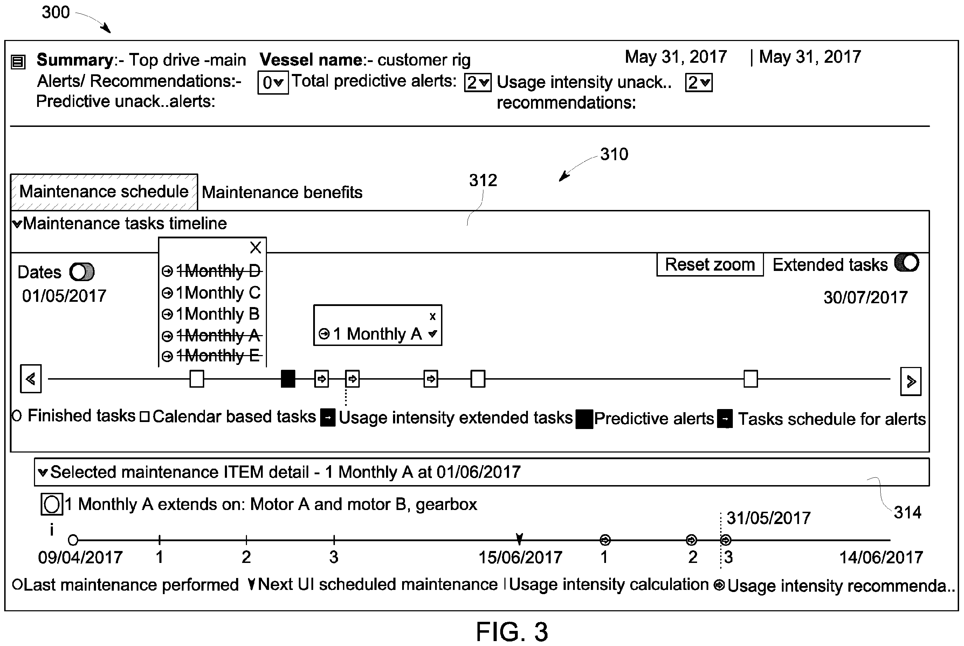

FIG. 3 is a chart illustrating an example of a modified maintenance schedule generated within the system of FIG. 1B that can be implemented within one or more embodiments. As shown in chart 300, the modified maintenance schedule 310 includes a maintenance task timeline 312 and a selected item task detail 314. As shown in the maintenance task timeline 312 including finished-base tasks, calendar-based tasks, UI extended tasks and predictive alerts, and tasks scheduled alerts, for example. The maintenance task timeline 312 illustrates the overall maintenance tasks necessary for a network including a plurality of equipment. The selected item task detail 314 illustrates maintenance for a specific piece of equipment of the plurality of equipment.

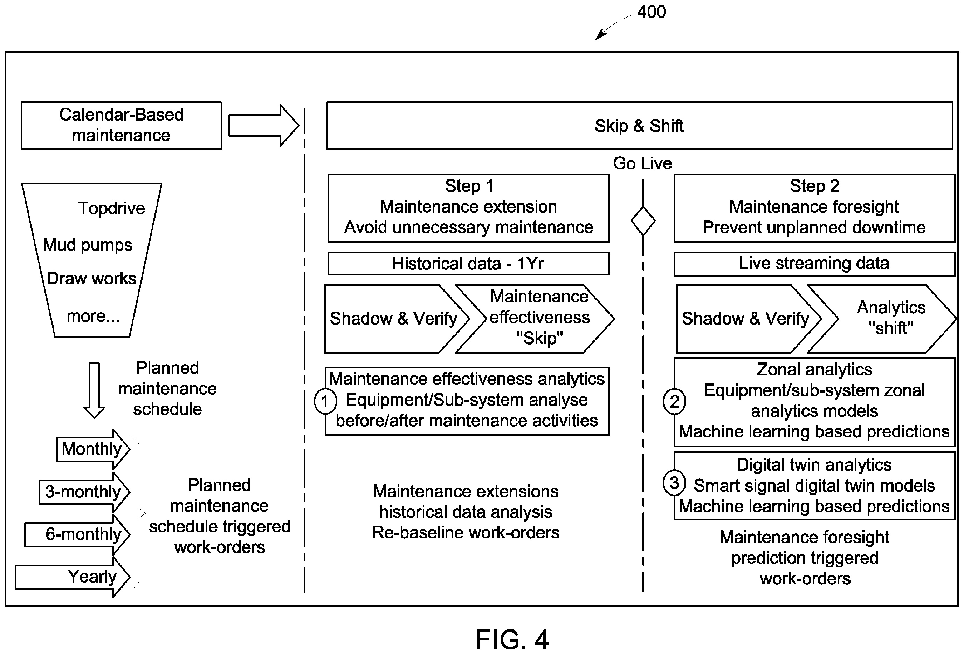

The system 100 shown in FIG. 1B, can employ a skip shift process to determine when to extend or verify existing maintenance tasks. FIG. 4 is a flow diagram illustrating the skip and shift process 400 of the system 100 of FIG. 1B. The skip shift process 400 is performed on different types of equipment, for example, top drives, and mud pumps etc. Existing maintenance tracking systems typically include calendar-based maintenance that include a planned maintenance schedule to be performed monthly, every three-months, six-months, yearly, and the like.

As shown in step 1, the skip shift process 400 includes determining maintenance extensions to avoid unnecessary maintenance. By way of example, this determination can be based upon the historical data for a one (1) year period, as received from the networks 50, 55, 60, and 65 by the computing module 110 of FIG. 1B. The maintenance of the industrial equipment components is shadowed and verified and based on maintenance effectiveness a "skip." A skip is performed such that the routine scheduled maintenance can be skipped without damage to the equipment. The maintenance effectiveness analytics performed can include equipment analysis before and after the maintenance activities.

In step 2 of the skip shift process 400, maintenance foresight is performed to prevent unplanned downtime of the equipment by prediction of necessary maintenance. Data regarding the equipment is live streamed to the computing module 110, and the maintenance of the equipment is shadowed and verified by analysis. The analytics can be zonal analytics which include equipment zonal models and use of machine learning based predictions.

Further, predictive maintenance analysis using machine learning based predictions can be performed. Based on the analytics, a shift of the maintenance schedule is performed.

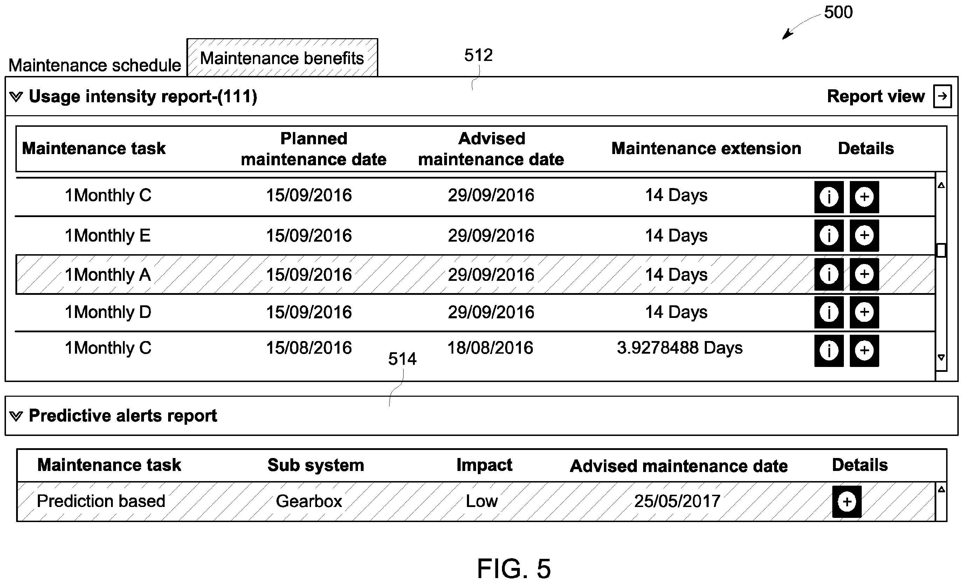

FIG. 5 is an exemplary chart 500, illustrating maintenance histories of the industrial equipment components and maintenance benefits to be displayed to a user at the user interface 70, such as a workstation. The chart 500 includes maintenance benefit information including a UI report 512, and a predictive alerts report 514.

The UI report 512 includes the maintenance task, planned maintenance data, an advised maintenance date, and the calculated maintenance extension (i.e., the number of days extended) for each maintenance task. The predictive alerts report 514 can also include the type of maintenance task, the subsystem or equipment (e.g., a gearbox), the impact of the maintenance extension (e.g., low), and/or the advised maintenance date.

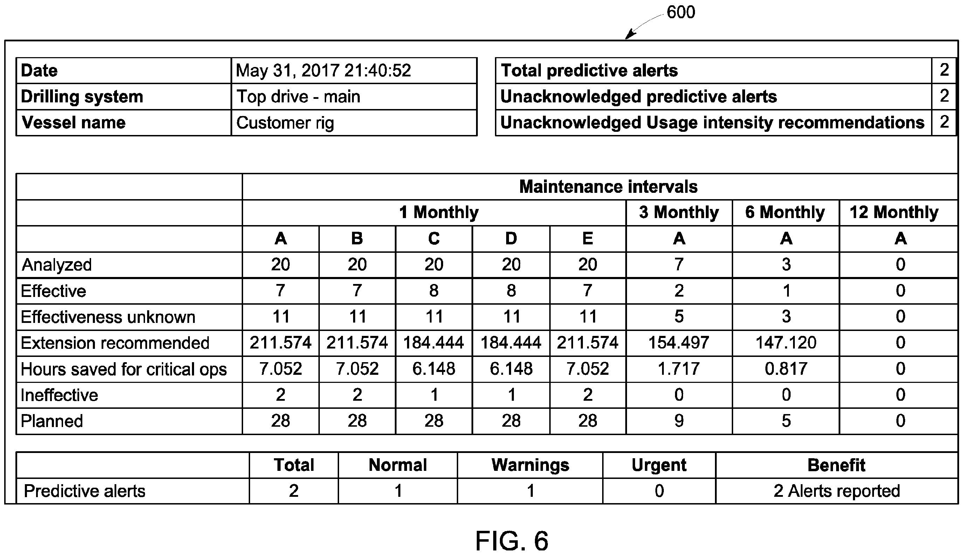

FIG. 6 is an exemplary chart 600 illustrating recordkeeping and reporting of effectiveness of modified maintenance schedules in accordance with the embodiments. As shown in the chart 600, within any given equipment component system, the number of pieces of equipment analyzed can be calculated, along with the effective modified maintenance schedules, and the unknown effectiveness. Additionally, total extension days determined, man hours saved, ineffective maintenance extensions, and planned maintenance can be calculated. The report data can be displayed and analyzed by operators at the user interface 70 for purposes of determining the effectiveness and accuracy of the system 100.

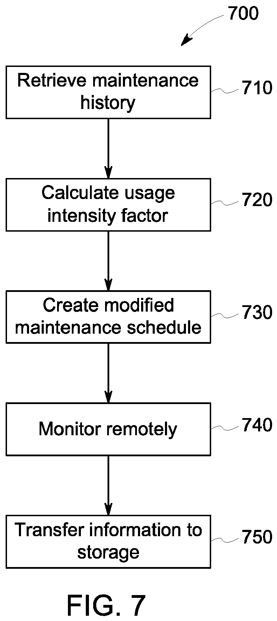

FIG. 7 is a flow diagram illustrating an exemplary method 700 for performing maintenance optimization through predictive analysis and UI that can be implemented within one or more embodiments of the present invention in reference to FIG. 1B. The method begins at operation 710 where the computing module 110 retrieves maintenance history and equipment parameters associated with the equipment components via the networks 50, 55, 60, and 65. The computing module 110 then processes the maintenance history of the industrial equipment components.

From operation 710, the process continues to operation 720 where the computing module 120 then calculates usage intensity factor (UIF) based on the maintenance history and equipment parameter values retrieved by the computing module 110. From operation 720, the process continues to operation 730 where the computing module 130 is configured to create modified maintenance schedules of the industrial equipment components. The modifications are created as a function of the maintenance history and UI, calculated via computing modules 110, 120, and 130. The modified maintenance schedules can be displayed via the user interface 70.

From operation 730, the process proceeds to operation 740 where this process is duplicated in the case of remote monitoring. From operation 740 the process continues to operation 750 where the information, including the modified maintenance schedules, maintenance history etc., is transferred to the storage module 140 and retrievable and controllable by an operator via the software application module 150.

Embodiments of the present invention provide the advantages of generating additional maintenance and inspection tasks to resolve issues before breakdown to reduced unplanned downtime and repairs. The embodiments use principles of big data management to bring maintenance optimization to an enterprise level, providing visibility of maintenance requirements, schedules and equipment conditions to a centralized location allowing maintenance analysis and optimization to be performed. The embodiments allow an operator to extend maintenance of equipment with the knowledge that any abnormalities will be detected prior to a failure occurrence.

Exemplary Virtual Machine Embodiments

The embodiments, discussed in more detail below, are for illustrative purposes and not meant to be limiting. A person ordinarily skilled in the art (POSITA) would recognize that certain changes (e.g., in geo-spatial disposition of various measuring, tracking, and computing modules etc.) would be within the scope of the disclosed invention.

Herein, the terms artisan, routineer, and POSITA may be used interchangeably. The term target asset will be used generically to refer to a single piece of equipment (e.g., a motor or gear) or to more complex equipment having pluralities of components. The terms computer, processor, and virtual machine may be used interchangeably. The term communication interface will be used generically to include LAN/WiFi, WAN, cloud, Internet, dedicated/private communications links, etc. The terms data and information will be used interchangeably.

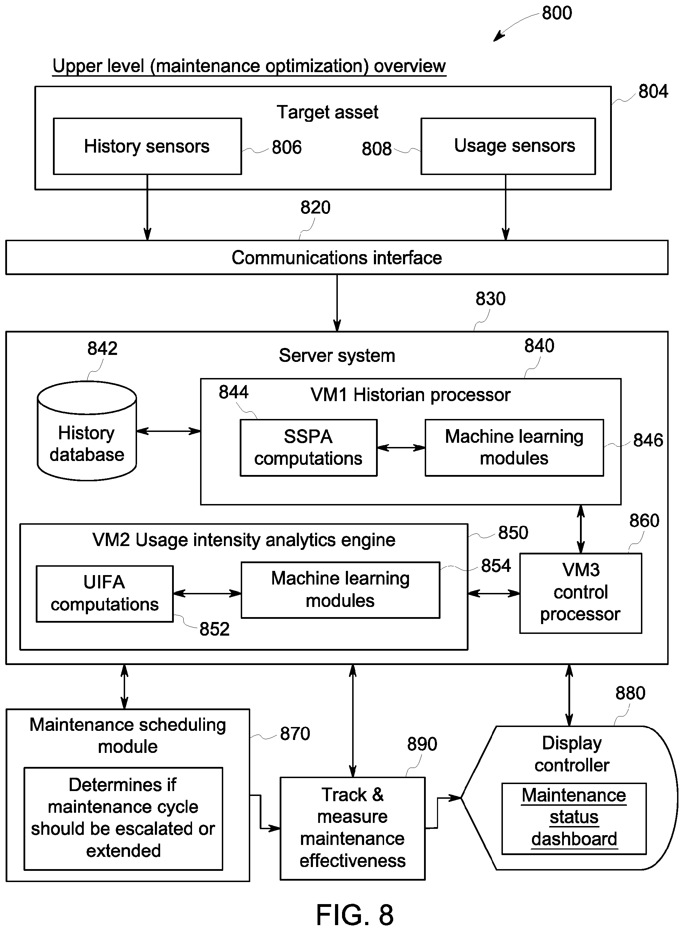

FIG. 8 provides an upper level overview of the disclosed system 800, as applied for one network (such as anyone of networks 50, 55, 60, 65 in FIG. 1B). This is not meant to limit the scope of the disclosed system to use with just one network, as the principles disclosed herein could be similarly, and/or simultaneously, used (under either local/distributed or remote centralized control) for a plurality of networks as those indicated in FIG. 1B.

The system 800 includes a target asset (TA) 804 as comprising history sensors 806 and usage sensors 808. An artisan would of course recognize that such sensors could be physically located either locally (i.e., in or on the TA) or be operatively coupled to remote/central monitors, through a communications interface 820.

History & usage sensory signals (further explained below) from TA 804 are received by element 830, which represents a computing/server system. In this particular embodiment, the server includes three virtual machines (VM1-element 844, VM2-element 850, VM3-element 860). Equivalent/alternative server configurations would be recognized by the artisan as within the scope of the disclosed invention.

VM1 is an historian processor 840. It includes a smart signal predictive analytics (SSPA) module 844. VM1 performs SSPA maintenance computations, using both incoming and stored 842 history data, in conjunction with analytics from its machine learning modules 846. VM1 combines this information to make TA performance/failure predictions, for maintaining a selected TA. For example, VM1 may compare current behavior with predicted values developed from similarity based modelling for various operating modes.

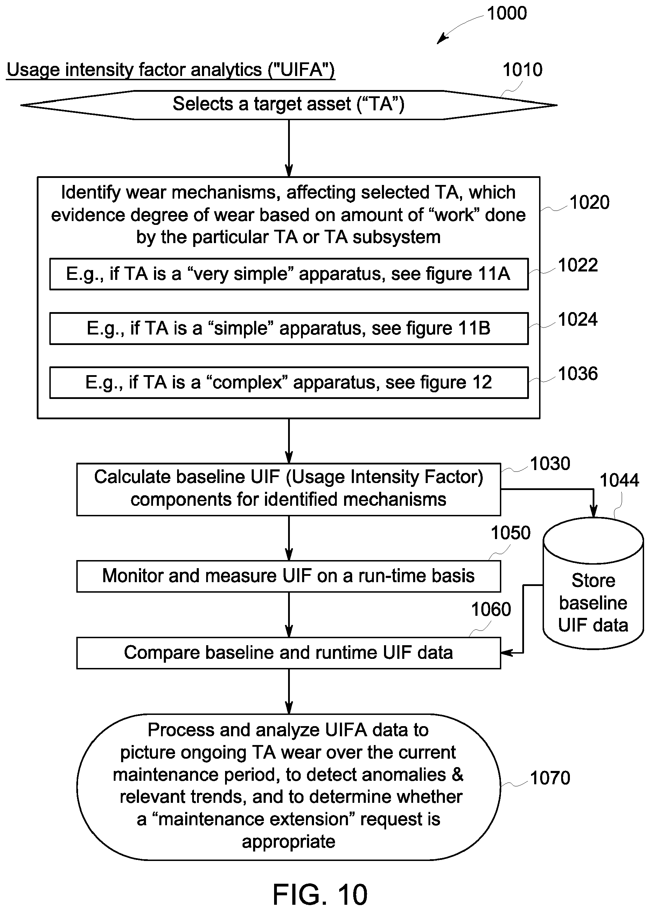

VM2 is a UI analytics engine 850. VM2 850 includes a UI factor analytics (UIFA) module 852. VM2 performs UIFA computations using model behavior data (for equipment in the same class as the TA of interest), incoming sensory and stored usage data, and analytics from its own machine learning modules 854. For example, VM2 may compare (e.g., FIG. 10) sensed usage data, which indicates the actual amount of wear or work performed, with model baseline data developed for the specific type of TA apparatus (e.g., FIGs. 10 and 11-12).

VM3 is a control processor 860. VM3 combines information from VM1 and VM2 and manages maintenance tracking and scheduling 870. VM3 also uses the historical and calculated data to drive dashboards providing meaningful information on maintenance status of covered equipment, and VM3 860 controls displays 880 and interactions with operators. While depicted as separate from the control processor 860; a POSITA would recognize that elements 870, 880, and 890 may be equivalently configured as physically part of the control processor, or geo-spatially removed from the control processor but operatively coupled thereto.

A POSITA would also recognize that some calculations, determinations, and computations ascribed to one part of the server-system could be performed in one or more other parts of the server-system without departing from the scope of the disclosed invention.

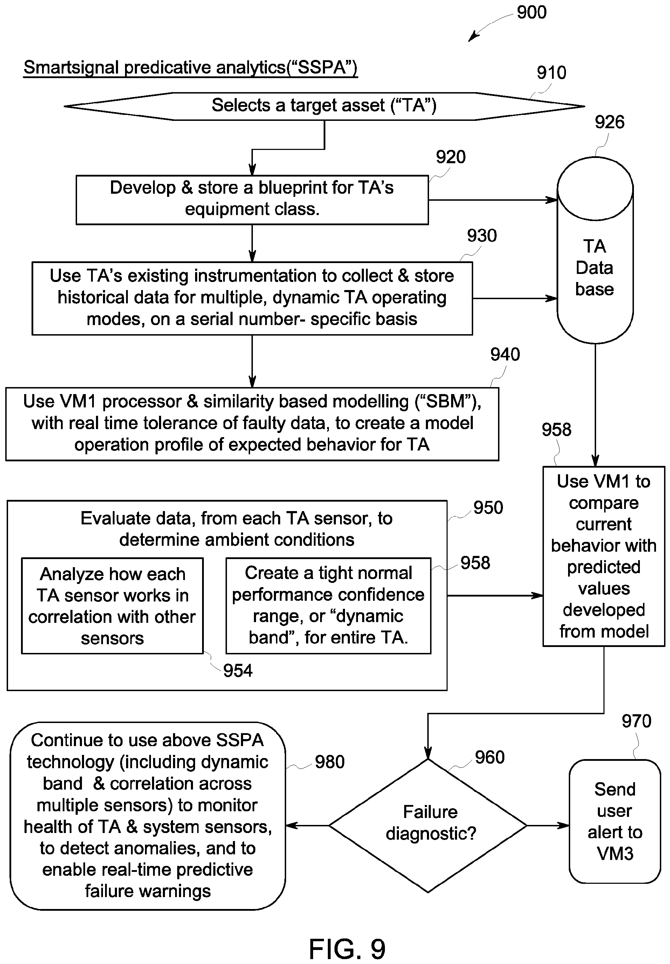

FIG. 9 is a flowchart for an SSPA determination embodiment 900 using a blueprint model. After a TA of interest is selected 910, a blueprint for the TA's equipment class is developed 920 and stored 926. Next, the TA's existing instrumentation 930 is used to collect historical data for multiple operating modes on a serial number basis.

Thus, the routineer would recognize that one (both cost and convenience) benefit, of the disclosed solution, is that special/additional instrumentation is NOT required since existing instrumentation is employed for this data collection phase. Moreover, the disclosed SSPA system uses only historical operating data rather than detailed process or equipment engineering data.

In step 940, the VM1 processor is used to implement SBM to create and store 926 a dynamic expected operating profile for the TA. At step 950, the VM1 processor evaluates data from each of multiple sensors, calculates ambient conditions, and determines how each TA sensor works in correlation with other sensors 954. The VMI processor also creates a tight normal performance confidence range, or dynamic band 957, for the entire TA. At step 958, the VM1 may be used to compare current behavior with predicted values from the prior developed model. The system determines whether a failure diagnostic has been detected 960. In the example of FIG. 9, if the answer is YES, a user alert 970 is sent via VM3.

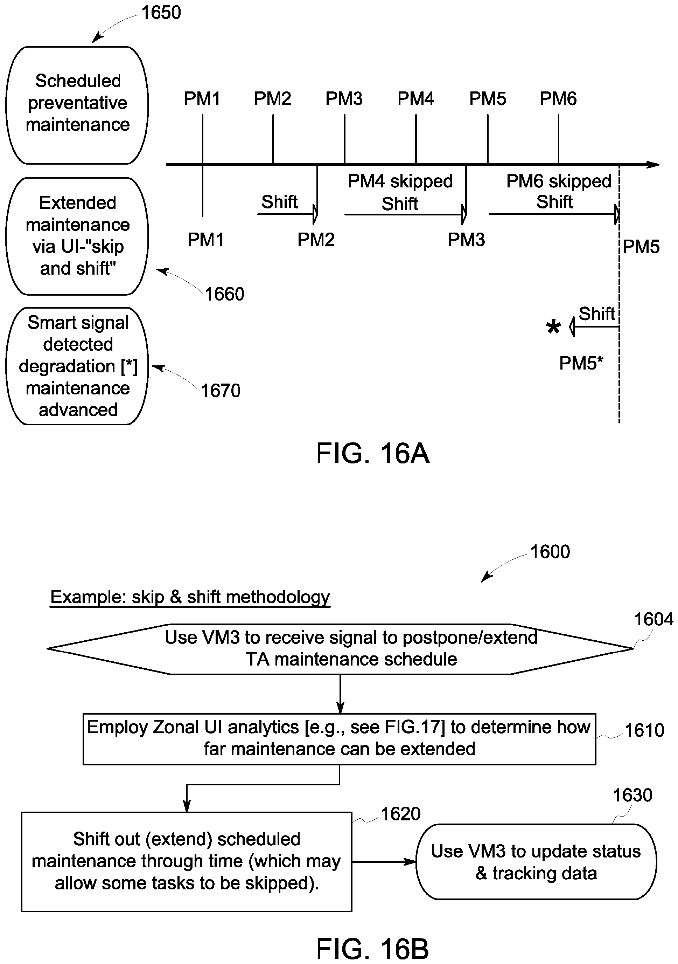

If the answer is NO 964, then use of the SSPA technology continues 980 for monitoring the health of the TA and for detection of anomalies, to enable real-time predictive failure warnings. Thus, using SSPA allows users to continuously monitor equipment performance and detect any degradation 1670. This provides advanced warnings of potential failure, often early enough to recommend carrying out additional maintenance inspections or tasks during an upcoming maintenance (e.g., see PM5 shift, at FIG. 16B).

Usage Intensity Factor Analytics Details

FIG. 10 is flowchart 1000 for an embodiment employing UIFA determinations. Once a target asset is selected 1010, and an understanding of the wear mechanisms affecting an item of equipment are identified 1020, it is possible to identify measures (e.g., 1022, 1024, 1036) of how intensively the equipment has been used. Accordingly, its maintenance schedule can be modified 1070 in relation to the amount of wear experienced.

Other maintenance systems consider the number of hours equipment has been run as a measure of its usage, which does not take into account the amount of work the equipment does while it is running. The approach described herein looks in depth at the equipment operation to define the wear mechanisms.

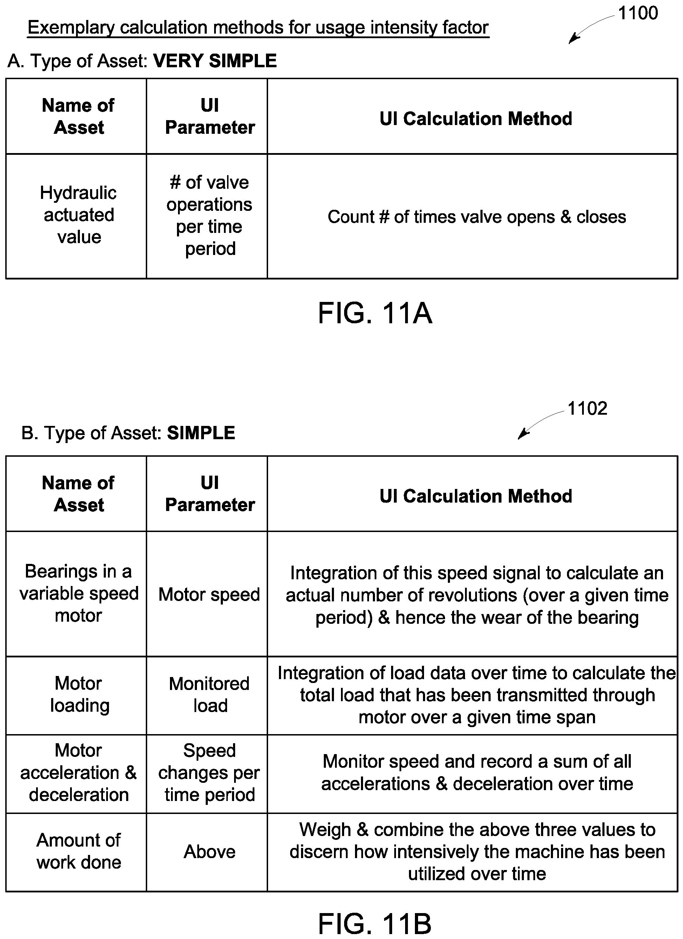

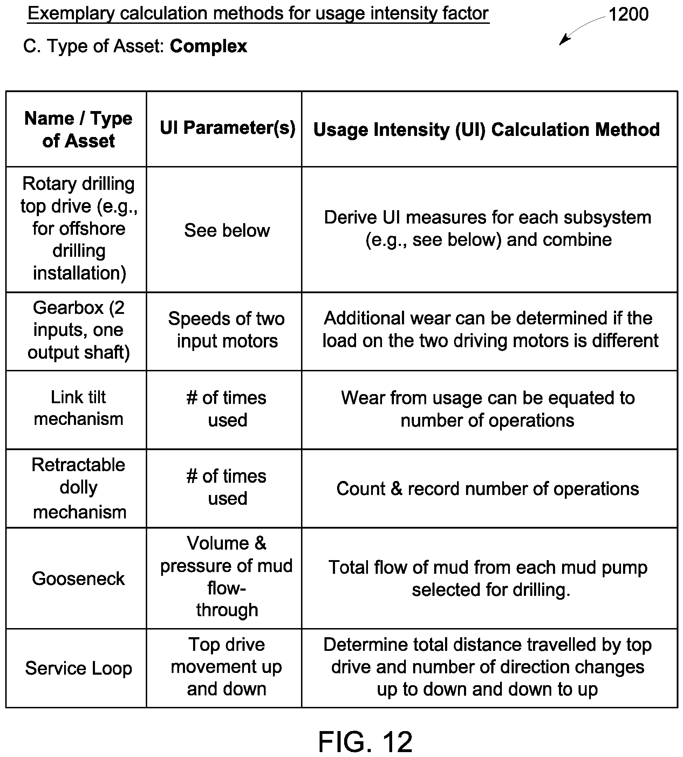

FIGs. 11A, 11B, and FIG.12 illustrate UIFA calculation methods for very simple 1100, simple 1102, and complex apparatuses 1200, respectively. When initially configuring the system, to ensure the most representative calculations of wear are carried out, wear mechanisms are examined on a case by case basis for each target asset. For example: if the TA is a very simple apparatus (e.g., a valve), see FIG.11A; if the TA is a simple apparatus (e.g., bearings), see FIG.11B; if the TA is a complex apparatus, such as a gearbox, see FIG. 12.

Continuing with FIG.10, using the wear mechanisms identified at step 1020, baseline usage intensity factor (UIF) components are calculated 1030 and stored 1044. The UIF parameters can then be monitored and measured on a real-time basis 1050. Comparisons are then made between the baseline and run-time UIF data 1060.

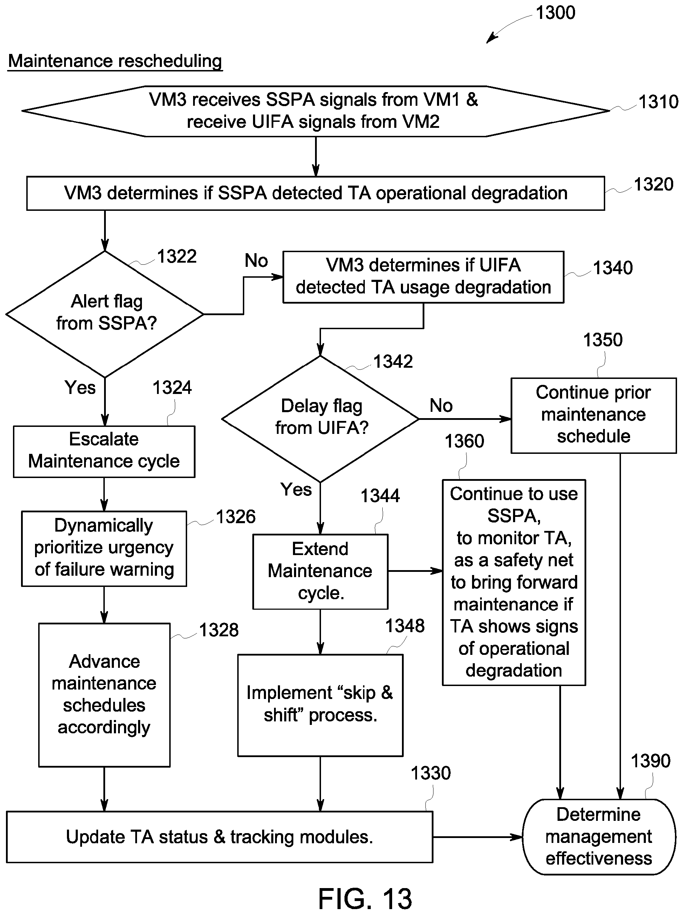

VM2 can thus be used to process and analyze the UIFA data to picture ongoing TA wear, over the current maintenance period. Thereby, this UIF data processing also allows detection of anomalies and relevant trends 1070. The results of the UIF analysis further enables determination of whether a maintenance extension request is appropriate (e.g., FIG.13). More detailed example UIF calculations are provided below.

The top drive power mechanism, noted above, consists of multiple components, including two motors: motor A and motor B. Motor A and Motor B are brought together into a dual input bull and pinion gearbox, depicted in FIG. 3. Each motor and the gearbox can be viewed independently for performing predictive maintenance and intensity usage calculations. Although calculations are performed on a case-by-case basis, several calculations performed in the examples below, are common to all systems.

The system 100 of FIG. 1B may detect a problem within and recommend maintenance on one or more of the components. As a result, it may be necessary to track maintenance on each of the components independently. For example, the system 100 may indicate a problem with bearings in motor A and may elect to perform maintenance on motor A only, leaving motor B unchanged.

For purposes of illustration, consider wear on the top drive train (motors, gearbox, coupling, etc.). Wear on top of the drive train has a direct relationship to the number of revolutions of the motor. Revolutions of the motor correlate to running time and running speed. Calculating the number of revolutions is accomplished in the same manner for motor A, motor B, and the gearbox.

In a first example calculation, the system 100 can track top drive motor and gearbox utilization, based upon predictive maintenance, in accordance with the embodiments. The utilization can be determined by considering total hours run and the actual number of revolutions of each motor, or the gearbox, since last maintenance. The utilization can be calculated as a function of the number of revolutions (N). In the present example, the utilization can be calculated by integrating rotational speed in accordance with the expression

$$N = \int_{t=T0}^{t=Tcur} \omega(t) \, dt$$

where N = total number of revolutions between time 0 and current time

Tcur = current time

$T_0$ = time of performance of last maintenance

$\omega$ = angular velocity

By analysis of the historical data, the maximum number of revolutions in any six (6) week period will be $\text{Rev}_{max}$. Software, within the system 100, is configured to count the total number of revolutions after three (3) weeks. This count is used to project the length of time required to reach the same value of $\text{Rev}_{max}$, which represents the maximum possible extension of maintenance.

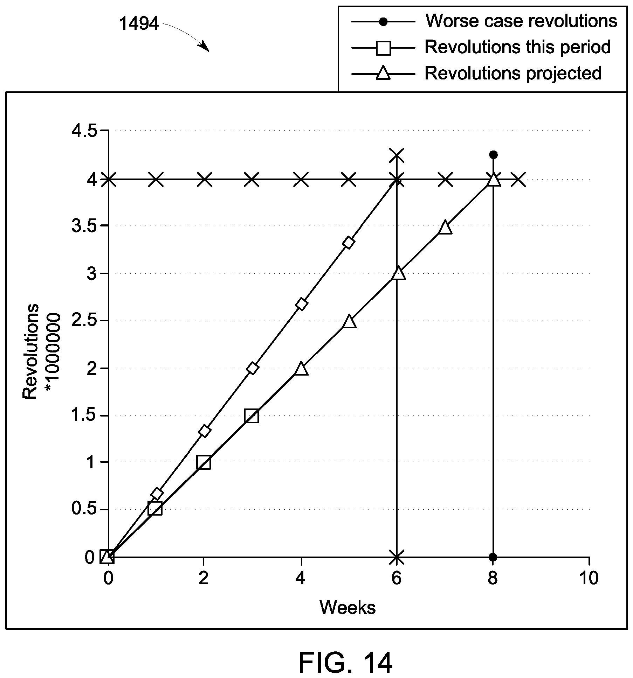

In this first example, the maximum possible extension can initially be limited to 30%. The extension will be re-evaluated periodically (e.g., weekly), up to a point where maintenance is performed. This process is illustrated in a graph 1494 shown in FIG. 14. Once maintenance has been performed, the count of the number of revolutions is desirably reset to zero (0).

In a second example, total power transmission can be calculated, based upon predictive maintenance, according to the embodiments. Just as revolutions of the motor correlate to running time and running speed, discussed above, the integral of drive powers correlates to total energy transmitted through the top drive. In this example, total power transmission can be calculated as

$$P_{sum} = \int_{t=T0}^{t=Tcur} [P_1(t) + P_2(t)] \, dt$$

Where $P_{sum}$ = sum of power passed through topdrive

Tcur = current time

$T_0$ = time of performance of last maintenance

$P_1$ = motor 1 power

$P_2$ = motor 2 Power

By analysis of vessel historical data, the highest value of power transmitted in any six (6) week period can be calculated as $Pow_{max}$. Software within the system 100 measures a total value power transmitted after three (3) weeks. This measurement value can be used to project the length of time required to reach the same value of $Pow_{max}$, which represents the maximum possible extension of maintenance. This process correlates to the maximum maintenance extension.

In the second example, the maximum maintenance extension is initially limited to a maximum extension of 30%. The possibility of extending maintenance will be re-evaluated periodically (e.g., weekly), up to a point where maintenance is performed. Once maintenance has been performed, the measurement value of the power flow is desirably reset to zero (0).

In yet a third example, the system 100 can calculate stress factors by considering the acceleration of the motors A and B. If the speed of the motors is oscillating rapidly, the top drive will be subject to additional harmful stresses. Conversely, if the speed is steady, there will be less stress on the system. In this example, angular acceleration is calculated as the differential of angular velocity. As such, the average of acceleration over the period, since maintenance was last performed, can be used as a stress multiplier when considering maintenance extension. The average acceleration can be calculated as

$$S = \frac{\sum_{n=T0}^{n=Tcur}[\frac{d\omega}{dt}]}{n}$$

where S = stress factor, representing averaged acceleration

Tcur = current time

$T_0$ = time when last maintenance was carried out

$\omega$ = angular velocity

By analysis of Integrator data, we find the highest value of acceleration stress in any six (6) week period as being Accmax. Software, within the system 100, measures the value of the total power transmitted after three (3) weeks. This measurement value can be used to project the length of time required to reach the same value of Accmax., which represents the maximum possible extension of maintenance.

In the third example, the maximum maintenance extension is again initially limited to a maximum extension of 30%. The possibly of extending maintenance will be re-evaluated periodically (e.g., weekly), up to a point where maintenance is performed. Once maintenance has been performed, the measurement value of the acceleration stress is reset to zero (0).

In one other example, a few calculations for predictive maintenance of inside blow out preventer (IBOP) are illustrated. IBOP maintenance is desirably performed periodically, for example, monthly or every few months. The need to perform maintenance on the IBOP is related to two areas.

Wear occurs as a result of IBOP operation. Therefore, by maintaining a count of the number of IBOP operations since the last maintenance was performed, an assessment of the number of operational cycles that can be accomplished before maintenance is required, can be developed. When maintenance is performed on the IBOP, the operational count is reset to zero (0).

A full cycle of the IBOP is equivalent to a transition from open to close, and back to open. By analysis of integrator data, the IBOP operational count within any six (6) week period as being $IBOP_{max}$. Similar to the descriptions above, software within the system 100 counts the total number of operations after three (3) weeks. This count is used to project the length of time required to reach the same value of $IBOP_{max}$.

Projecting this length of time provides the maximum extension of maintenance - initially limited to a maximum extension of 30%. As discussed earlier, the possibility of extending maintenance will be re-evaluated periodically (e.g., weekly), up to a point where maintenance is performed. Once maintenance has been performed, IBOP operations will be reset to zero (0).

A goose-neck is another component, subjected to wear, for which predictive maintenance would be particularly advantageous. As understood to those of skill in the art, a goose-neck is a thick metal elbow that interacts with other components to support the weight of high pressure hoses. A major cause for wear on the goose-neck is mud flowing through it, which erodes the inner surfaces of the pipe. Goose-necks are typically replaced rather than maintained. This exercise can be especially costly when unworn, and still functional goose-necks, are replaced.

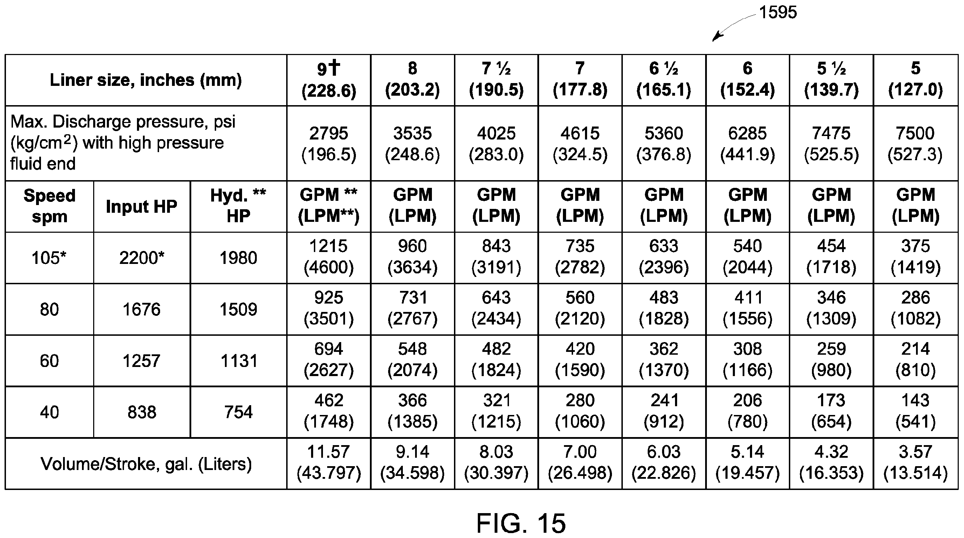

With information, such as the number of mud pump strokes per minute and pump liner size, the flow of mud being pumped can be calculated using table 1595 in FIG. 15, as shown below. Table 1595 provides values related to gallons per minute (strokes per minute multiplied by volume per stroke) of mud flow.

The inventors of the present application have observed that total wear on the goose-neck is proportional to the volume of mud flowing through it. One approach to calculating the total volume of mud through the goose-neck is to integrate the flow over time using the expression

$$V = \int_{t=T0}^{t=Tcur} F \, dt$$

where $V_T$ = Total volume of mud in current maintenance period

Tcur = current time

$T_0$ = time when last maintenance was carried out

F = mud flow = pump speed (stokes per minute) x stroke volume (m cubed)

By analysis of historical data, we see the highest mud volume passed through gooseneck in any (six) 6 week period as being $Mud_{max}$. Software, within the system 100, measures the value of the total mud flow after three (3) weeks and uses this value to project how long it will take to reach the same value of $Mud_{max}$. This measurement value can be used to project the length of time required to reach the same value of Accmax., which represents the maximum possible extension of maintenance.

Software, within the system 100, analyzes the total mud flow after three (3) weeks and uses this to project the amount of time required to reach the same value of $Mud_{max}$. This process depicts the maximum maintenance extension - which will be initially limited to a maximum extension of 30%. In the present example, the extension will be re-evaluated periodically (e.g., weekly) up to the point where maintenance is carried out.

Maintenance Rationalization

Returning to FIG. 13, an overview diagram illustrating maintenance rationalization and rescheduling 1300 is provided. Once the wear mechanisms are identified in a piece of equipment or component, it is possible to review the equipment recommended maintenance procedures in detail to map each maintenance task to the equipment wear it is trying to mitigate. Historical data is analyzed to look at the maximum usages the equipment has seen over a typical operating cycle. This forms the basis for being able to extend individual maintenance tasks if the associated UIs are less than derived maximums.

Traditional schedule-based maintenance typically covers maintenance for equipment designed to run at high loads for extended periods of time. Often equipment is operated at far lighter loads than the design nominal; hence the equipment is subject to less wear and needs less frequent maintenance. If necessary recommended maintenance activities, which fall under a scheduled maintenance event, can be reorganized in line with findings. Maintenance events can be extended (or delayed/postponed) in line with usage provided from historical analyses.

Maintenance Rescheduling

On the FIG. 13 flowchart at step 1310, VM3 receives SSPA signals (from VM1) and UIFA signals (from VM2). VM3 then determines if SSPA detected TA operational degradation 1320. If an alert flag has been received from SSPA 1322, then VM3 calls for escalating the TA's maintenance cycle 1324 and performing the necessary maintenance event at an earlier time than previously scheduled.

VM3 also dynamically prioritizes the urgency of the received failure warning 1326. If a more urgent problem is identified after review by subject matter experts, an automatic maintenance request would be submitted to the maintenance system controller, thereby triggering appropriate corrective responses.

The system then advances 1328 the TA's maintenance schedule accordingly 1670. Updates are then transmitted to the TA status and tracking modules. (E.g., see FIG. 16A.) This information is also used in determining management effectiveness 1390.

If no SSPA flag is detected 1322, VM3 determines if the UIFA signals (which indicate ongoing equipment usage) include recommended delays or extensions of one or more TA maintenance events 1340. If no delay/extension flag is detected, maintenance continues as previously scheduled 1350.

If a delay flag has been received from UIFA 1342, then VM3 can call for an extension (or stretching-out) of the TA's maintenance schedule 1344. During the extension period, the system continues to use SSPA to monitor the TA as a safety net. Thereby, maintenance events can be brought forward if TA shows signs of degradation during the extension period 1360.

Receipt of a flag indicating that a maintenance event may be delayed actuates computations to determine if implementation of a "skip & shift" process 1348 is appropriate; and if so, for how long. (e.g., see FIGs. 3-5, 16A, and 16B). In addition, TA status and tracking information is updated 1330 and data is generated for determining management effectiveness 1390.

Skip & Shift Methodology

FIG. 16B is an overview flowchart illustrating an example of skip & Shift method 1600. Skip and shift refers to the way scheduled preventative maintenance can be shifted out (extended), based on equipment UI. In the method 1600, by way of example, VM3 860 receives a scheduling signal 1604. As maintenance is extended through time, some tasks can be skipped 1620. Combining UIFA and SSPA allows a unique mechanism to extend or postpone maintenance periods, resulting in reduced maintenance down time and reduced material costs. In step 1630, VM3 860 updates status and tracking data.

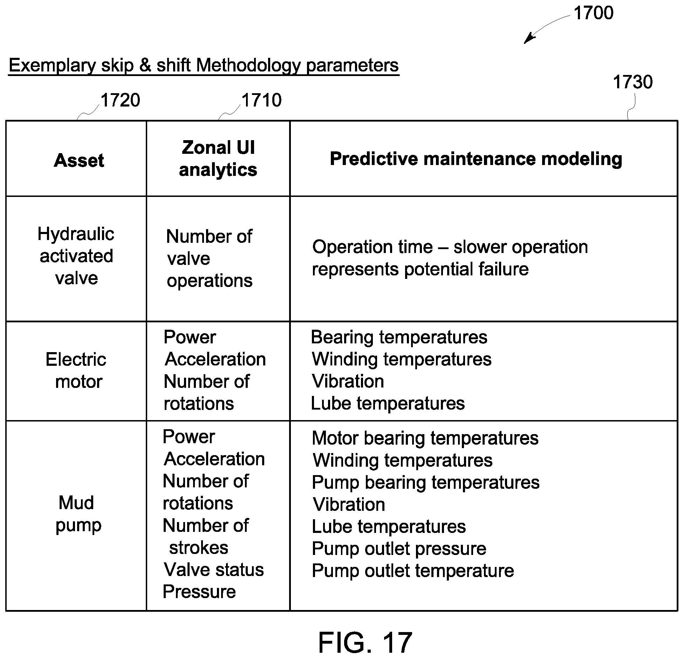

Zonal UI Analytics (1610, 1920) indicate how far maintenance can be extended. A full set of UIFA and SSPA factors is considered for each asset. For example, chart 1700 of FIG. 17 depicts several illustrative skip & shift parameters based upon zonal analytics in column 1710 for selected target assets 1720. Column 1730 includes parameters based on predictive maintenance modeling principles.

FIG. 16A is an exemplary timeline diagram comparing Calendar scheduled maintenance vs Extended maintenance vs Advanced maintenance. The upper timeline 1650 illustrates calendar scheduled maintenance. The middle timeline 1660 illustrates postponed "skip & shift" event movement along the timeline, whereby some maintenance events are delayed until a later time. The lower timeline 1670 illustrates advanced maintenance, whereby one of more events are performed at an earlier time than previously scheduled.

Maintenance Effectiveness Analytics

FIG.s 18 & 19A illustrates aspects of Maintenance Effectiveness Analytics 1800 and 1910 as employed in the Embodiments. Through continuous monitoring, maintenance effectiveness information is fed back into the maintenance scheduling calculations to allow a continuous system learning and improvement in modelling capabilities. The management effectiveness analytics include before-and-after analysis 1912 to help make decisions on the expected target asset MER (Management Effectiveness Rating) and history data analysis 1914. Maintenance can be broadly categorized as effective maintenance, ineffective maintenance, and detrimental maintenance.

Also included are zonal analytics 1920, including UI based maintenance extension estimates 1922 and UIA 1924. A digital twin analytics module 1930 includes a digital twin degradation analysis 1932 and a simulation-based modeling analysis 1934.

Effective maintenance occurs where equipment begins to show signs of graceful degradation before maintenance carried out. Equipment returns to nominal status after maintenance. Ineffective maintenance occurs where there is no noticeable change in key operating parameters before or after the maintenance. No SPA alerts are generated before maintenance is carried out and maintenance is carried out unnecessarily. Detrimental maintenance is defined as having degradation in key operating parameters after maintenance.

With the MER system, as maintenance tasks are completed, the maintenance tracking system notifies the server-system. For example, if the maintenance task was a corrective action raised on the basis of a SSPA predictive insight 1812, calendar maintenance schedules 1814, and UIPA 1816, each task is analyzed to ascertain how effective the maintenance was 1820. the asset model should return to its nominal modelled state. For example, predictive maintenance, effectiveness may be determined by looking at key parameters such as temperature, since changes in these parameters show how effective the maintenance has been 1836.

Each maintenance task that has been carried out is assigned 1832 an overall MER. The MER data is combined with zonal analytics (SSPA, UIPA) to enhance data-driven maintenance 1840. The server-system also: continuously monitors MER data 1834, stores history of MER changes 1836, and updates the TA's maintenance dashboard. In addition, MER data is feedback into the maintenance scheduling system to allow continuous system learning and improved modelling 1850. The TA maintenance dashboard is then updated 1860.

Reporting and Bookkeeping

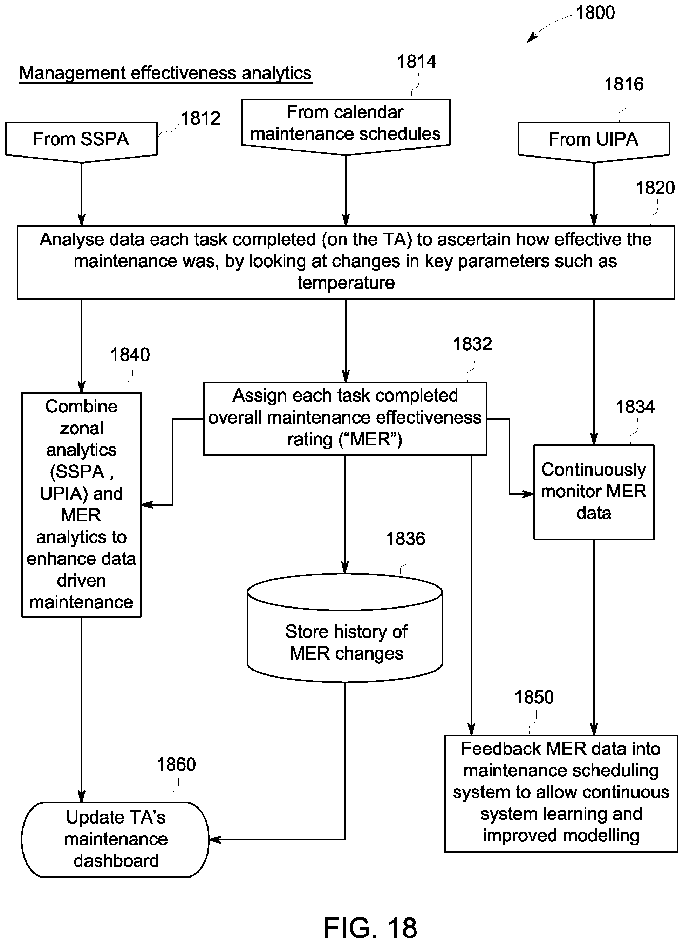

As indicated earlier, the disclosed invention tracks maintenance status for each TA. For example, see: FIG. 8 (890), FIG. 13 (1330), and FIG. 18 (1860). Comprehensive summaries of maintenance operations are generated providing details of hours spent, material costs and comparisons with original calendar (e.g., see FIGs. 6, 16B). Equipment usage over time is tracked along with associated effect on scheduling (e.g., see FIG. 3).

Audit histories are generated which show any schedule changes and that number of days the maintenance has been extended (e.g., see FIG. 5). Also provided are intuitive user interfaces and dashboards (e.g., see elements 70, 110, 250, 880, 1860), which allow review of maintenance histories and overview of effectiveness.

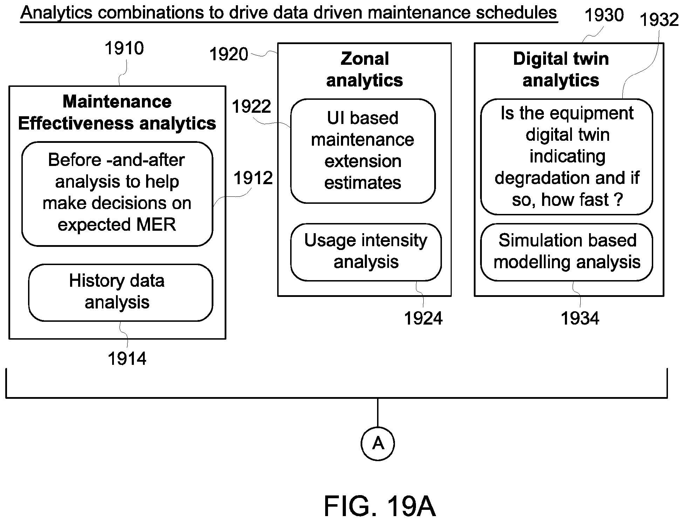

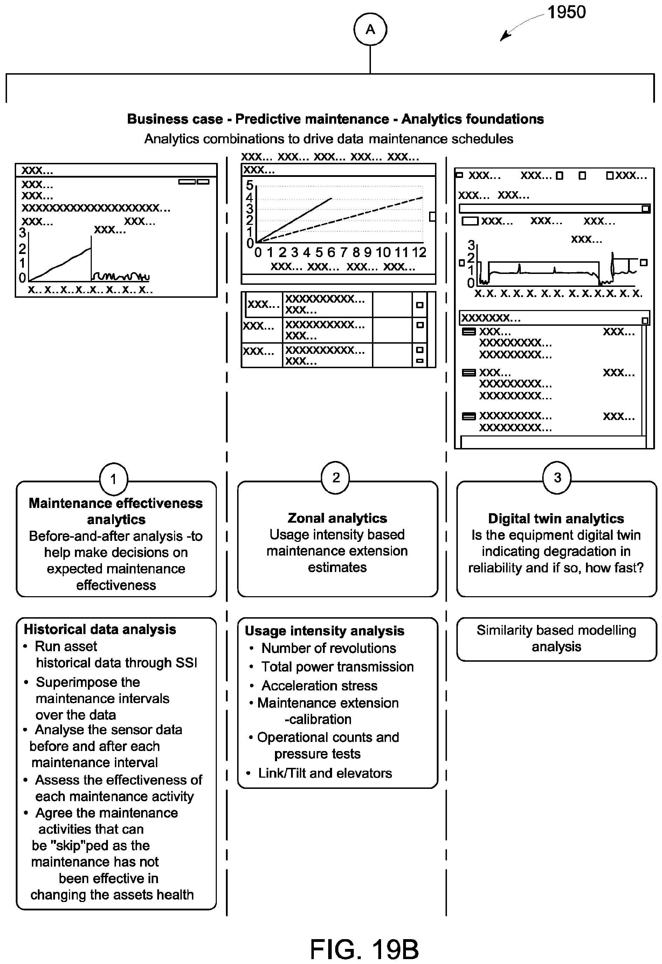

FIG. 19B is an overview 1950 illustrating how combinations of different analytic technologies and methodologies can be combined to drive data-driven predictive maintenance schedules. A few of the analytic technologies are management effectiveness analytics, historical data analysis, zonal analytics, UI analysis, digital twin analytics, and similarly based modelling analysis.

BENEFITS

By monitoring all available equipment parameters and utilizing similarity based modelling techniques through the described SSPA system, signs of imminent equipment failure can be detected. Through interfacing directly into the customers maintenance planning tools, additional maintenance can be generated. Additionally, inspection tasks are conducted to resolve issues before breakdown, which can reduce costly unplanned downtime and repairs.

By calculation of a UIF factor for each equipment component, maintenance can be postponed for lightly loaded equipment. This process can help avoid taking systems down for maintenance when it's not required, resulting in extended equipment availability. An additional benefit is provided of reducing maintenance consumable costs.

This system has several advantages over existing standalone control and condition based monitoring system. Traditional calendar systems, or CBM, provide local indication of potential equipment failure. The embodiments use principles of big data management to bring maintenance optimization to an enterprise level. This process also moves visibility of maintenance requirements, schedules and equipment conditions to a centralized location, which allows fleet wide analysis and optimization to be performed.

The combination of UI and predictive analytics provides the operator confidence when scheduling maintenance that any abnormalities will be detected prior to a failure. The unique concept of timestamping pre and post maintenance, using the residual values from the predictive model and actual readings, allows visualization of the effectiveness of the maintenance.

CONCLUSION

This written description uses examples to disclose the invention including the best mode, and also to enable any person skilled in the art to practice the invention, including making and using any devices or apparatuses and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Claims**

1. A system (100) for predicting maintenance on a plurality of industrial equipment components (10, 12, 14, 16, 18), comprising:
a plurality of computing modules (110, 120, 130) configured to:

   (i) retrieve maintenance history (710) and equipment parameters, e.g., one or more analog values, temperature or pressure values, control signals, reference speed and feedback signals, associated with the equipment components (10, 12, 14, 16, 18) from at least one equipment network (50, 55, 60, 65), and process the maintenance history,
   (ii) calculate usage intensity (720) based on the maintenance history and equipment parameters, and
   (iii) create modified maintenance schedules (730) of the plurality of equipment components (10, 12, 14, 16, 18) based on the maintenance history (710) and the calculated usage intensity.

2. A system (100) according to claim 1, further comprising:

   a storage module (140) in communication with the computing modules (110, 120, 130) and configured to store historical data obtained and usage intensity data calculated by the computing modules; and
   a software application module (150) configured to retrieve and control performance of the modified maintenance schedules.

3. A system (100) according to claim 2, wherein the storage and the software application modules (140, 150) are remotely located from the plurality of computing modules (110, 120, 130) and the at least one equipment network (50, 55, 60, 65).

4. A system (100) according to any preceding claim, wherein each computing module comprises:

   an internal memory (230) configured to store instructions;
   at least one processor (220) configured to receive the instructions from the internal memory (230) and perform (i), (ii) and (iii) by the plurality of computing modules (110, 120, 130).

5. A system (100) according to any preceding claim, wherein the modified maintenance schedules (730) created comprise a maintenance task timeline including a total of maintenance tasks for the equipment network (50, 55, 60, 65), and a selected item task including maintenance for a specific piece of equipment of the plurality of equipment components (10, 12, 14, 16, 18).

6. A system (100) according to claim 5, wherein the at least one processor (220) of one computing module of the plurality of computing modules (110, 120, 130) is further configured to:

   (i) perform a skip shift operation (1700) to determine when to extend existing maintenance tasks of the plurality of equipment components (10, 12, 14, 16, 18) on the equipment network (50, 55, 60, 65), wherein the skip shift operation (1700) comprises determining maintenance extension using historical maintenance data of the plurality of equipment components (10, 12, 14, 16, 18) and skipping routine scheduled maintenance based on the historical maintenance data; and
   (ii) retrieving maintenance data in real-time regarding the plurality of equipment components (10, 12, 14, 16, 18) on the at least one equipment network (50, 55, 60, 65) via a computing module of the plurality of computing modules (110, 120, 130), performing analytics using machine learning processes and shifting a maintenance schedule of the plurality of equipment components based on the analytics.

7. A system (100) according to any preceding claim, wherein the modified maintenance schedules are displayed and controlled via a user display (70).

8. A system (100) according to claim 7, wherein the modified maintenance schedules (730) include maintenance benefit information including usage intensity information (720) and predictive alerts (300).

9. A method (700) for predicting maintenance of a plurality of equipment components (10, 12, 14, 16, 18) on an equipment network (50, 55, 60, 65), the method comprising:

    retrieving at a first computing module (110), maintenance history (710) and equipment parameters associated with the plurality of equipment components (10, 12, 14, 16, 18) from the equipment network (50, 55, 60, 65) and processing the maintenance history;
    calculating at a second computing module (120), a projected usage intensity factor (720) based on the maintenance history (710) and values of the equipment parameter; and
    creating at a third computing module (130), modified maintenance schedules (730) of the plurality of equipment components (10, 12, 14, 16, 18, 20) based on the maintenance history and the usage intensity factor (720).

10. A method according to claim 9, wherein the equipment parameters comprises one or more of analog values, temperature or pressure values, control signals, reference speed and feedback signals of the plurality of equipment components.

11. A method according to claim 9 or claim 10, further comprising:

    storing the maintenance history and usage intensity factor; and
    retrieving and controlling the modified maintenance schedules via a software application module (150) in communication with the first computing module (110), the second computing module (120) and the third computing module (130).

12. A method according to any of claims 9 to 11, further comprising:
    performing, at the third computing module, a skip shift operation to determine when to extend existing maintenance tasks of the plurality of equipment components on the equipment network.

13. A method according to claim 12, wherein the skip shift operation comprises:

    determining maintenance extension using historical maintenance data of the plurality of equipment components and skipping routine scheduled maintenance based on the historical maintenance data; and
    retrieving maintenance data in real-time regarding the plurality of equipment components on the at least one equipment network via the first computing module, and performing analytics using machine learning processes and shifting a maintenance schedule of the plurality of equipment components based on the analytics.

14. A method according to any of claims 9 to 13, further comprising:
    displaying, at a user display, the modified maintenance schedules and/or maintenance benefit information including usage intensity information and predictive alerts.

15. A computer implemented equipment maintenance optimization system (800) for one or more target assets TA (804), the system (800) comprising:

    history sensors (806), configured to detect and transmit maintenance history data from the TA (804);
    usage intensity sensors, configured to detect and transmit wear or usage data from the TA (804);
    a computer server-system, comprising an historian processor (840), a usage intensity analytics engine, and a control processor (860);
    communications interface means (820), operatively coupled to said sensors and server-system;
    first logic means (844) for performing smart signal predicative analytics SSPA computations using received and stored model history data;
    second logic means (850) for performing usage intensity factor analytics UIFA computations using received and model wear data;
    third logic means (860) for combining information from the first and second logic means (844, 850) to determine whether maintenance events should take place at previously scheduled times, moved forward in time, or moved back to later times; and
    server-system logic means for calculating maintenance effectiveness, and for tracking and displaying maintenance status;
    whereby equipment maintenance is optimally extended when TA (804) is lightly used or brought forward when anomalies indicate imminent failure of the TA.

FIG. 1A

FIG. 1B

240

Instructions

250

Storage

250

I/O Module

220

Processor

270

Comm interface

230

Memory

110, 120, 130

FIG. 2

EP 3 483 803 A1

**Summary**:- Top drive -main  **Vessel name**:- customer rig          May 31, 2017   | May 31, 2017
Alerts/ Recommendations:-  [0▾] Total predictive alerts: [2▾] Usage intensity unack.. [2▾]
Predictive unack..alerts:                                        recommendations:

310

312

| Maintenance schedule | Maintenance benefits |

▾Maintenance tasks timeline

Dates ⬤                                                      Reset zoom | Extended tasks ◐
01/05/2017                                                             30/07/2017

X
⊝ 1 Monthly D
⊝ 1Monthly C
⊝ 1Monthly B          x
⊝ 1 Monthly A    ⊝ 1 Monthly A ▾
⊝ 1 Monthly E

◯ Finished tasks ☐ Calendar based tasks ▪ Usage intensity extended tasks ■ Predictive alerts ▪ Tasks schedule for alerts

▾ Selected maintenance ITEM detail - 1 Monthly A at 01/06/2017

[◎] 1 Monthly A extends on: Motor A and motor B, gearbox
                                                          :31/05/2017
                                                                          314
i  ◯————|————|————|————▾————⊕————⊕:⊕————
09/04/2017  1    2    3    15/06/2017  1    2 :3    14/06/2017

◯ Last maintenance performed  ▾ Next UI scheduled maintenance | Usage intensity calculation ⊕ Usage intensity recommenda..

FIG. 3

FIG. 4

EP 3 483 803 A1

500

Maintenance schedule | Maintenance benefits | 512

∀ **Usage intensity report-(111)**                                                    **Report view** →

| Maintenance task | Planned maintenance date | Advised maintenance date | Maintenance extension | Details |
|---|---|---|---|---|
| 1Monthly C | 15/09/2016 | 29/09/2016 | 14 Days | ⓘ ⊕ |
| 1Monthly E | 15/09/2016 | 29/09/2016 | 14 Days | ⓘ ⊕ |
| 1Monthly A | 15/09/2016 | 29/09/2016 | 14 Days | ⓘ ⊕ |
| 1Monthly D | 15/09/2016 | 29/09/2016 | 14 Days | ⓘ ⊕ |
| 1Monthly C | 15/08/2016 | 18/08/2016 | 3.9278488 Days | ⓘ ⊕ |

514

∀ **Predictive alerts report**

| Maintenance task | Sub system | Impact | Advised maintenance date | Details |
|---|---|---|---|---|
| Prediction based | Gearbox | Low | 25/05/2017 | ⊕ |

**FIG. 5**

600

| Date | May 31, 2017 21:40:52 | Total predictive alerts | 2 |
|---|---|---|---|
| Drilling system | Top drive - main | Unacknowledged predictive alerts | 2 |
| Vessel name | Customer rig | Unacknowledged Usage intensity recommendations | 2 |

| | Maintenance intervals | | | | | | | |
|---|---|---|---|---|---|---|---|---|
| | 1 Monthly | | | | | 3 Monthly | 6 Monthly | 12 Monthly |
| | A | B | C | D | E | A | A | A |
| Analyzed | 20 | 20 | 20 | 20 | 20 | 7 | 3 | 0 |
| Effective | 7 | 7 | 8 | 8 | 7 | 2 | 1 | 0 |
| Effectiveness unknown | 11 | 11 | 11 | 11 | 11 | 5 | 3 | 0 |
| Extension recommended | 211.574 | 211.574 | 184.444 | 184.444 | 211.574 | 154.497 | 147.120 | 0 |
| Hours saved for critical ops | 7.052 | 7.052 | 6.148 | 6.148 | 7.052 | 1.717 | 0.817 | 0 |
| Ineffective | 2 | 2 | 1 | 1 | 2 | 0 | 0 | 0 |
| Planned | 28 | 28 | 28 | 28 | 28 | 9 | 5 | 0 |

| | Total | Normal | Warnings | Urgent | Benefit |
|---|---|---|---|---|---|
| Predictive alerts | 2 | 1 | 1 | 0 | 2 Alerts reported |

FIG. 6

EP 3 483 803 A1

700

Retrieve maintenance history ～710

↓

Calculate usage intensity factor ～720

↓

Create modified maintenance schedule ～730

↓

Monitor remotely ～740

↓

Transfer information to storage ～750

FIG. 7

800

## Upper level (maintenance optimization) overview

**Target asset** 804

History sensors 806

808 Usage sensors

820

**Communications interface**

830

**Server system**

842

844 **VM1 Historian processor** 840

History database

SSPA computations

Machine learning modules 846

850

**VM2 Usage intensity analytics engine**

UIFA computations

Machine learning modules 854

852

860 **VM3 control processor**

**Maintenance scheduling module** 870

Determines if maintenance cycle should be escalated or extended

890 **Track & measure maintenance effectiveness**

880 **Display controller**

**Maintenance status dashboard**

## FIG. 8

900

Smartsignal predicative analytics("SSPA")

910

Selects a target asset ("TA")

920

Develop & store a blueprint for TA's equipment class.

926

TA Data base

930

Use TA's existing instrumentation to collect & store historical data for multiple, dynamic TA operating modes, on a serial number- specific basis

940

Use VM1 processor & similarity based modelling ("SBM"), with real time tolerance of faulty data, to create a model operation profile of expected behavior for TA

958

Use VM1 to compare current behavior with predicted values developed from model

950

Evaluate data, from each TA sensor, to determine ambient conditions

Analyze how each TA sensor works in correlation with other sensors

958

Create a tight normal performance confidence range, or "dynamic band", for entire TA.

954

970

Send user alert to VM3

960

Failure diagnostic?

980

Continue to use above SSPA technology (including dynamic band & correlation across multiple sensors) to monitor health of TA & system sensors, to detect anomalies, and to enable real-time predictive failure warnings

FIG. 9

1000

Usage intensity factor analytics ("UIFA")  1010

Selects a target asset ("TA")

Identify wear mechanisms, affecting selected TA, which evidence degree of wear based on amount of "work" done by the particular TA or TA subsystem  1020

E.g., if TA is a "very simple" apparatus, see figure 11A  1022

E.g., if TA is a "simple" apparatus, see figure 11B  1024

E.g., if TA is a "complex" apparatus, see figure 12  1036

Calculate baseline UIF (Usage Intensity Factor) components for identified mechanisms  1030

1044

Monitor and measure UIF on a run-time basis  1050

Store baseline UIF data

Compare baseline and runtime UIF data  1060

Process and analyze UIFA data to picture ongoing TA wear over the current maintenance period, to detect anomalies & relevant trends, and to determine whether a "maintenance extension" request is appropriate  1070

FIG. 10

Exemplary calculation methods for usage intensity factor — 1100

A. Type of Asset: **VERY SIMPLE**

| Name of Asset | UI Parameter | UI Calculation Method |
|---|---|---|
| Hydraulic actuated value | # of valve operations per time period | Count # of times valve opens & closes |

## FIG. 11A

— 1102

B. Type of Asset: **SIMPLE**

| Name of Asset | UI Parameter | UI Calculation Method |
|---|---|---|
| Bearings in a variable speed motor | Motor speed | Integration of this speed signal to calculate an actual number of revolutions (over a given time period) & hence the wear of the bearing |
| Motor loading | Monitored load | Integration of load data over time to calculate the total load that has been transmitted through motor over a given time span |
| Motor acceleration & deceleration | Speed changes per time period | Monitor speed and record a sum of all accelerations & deceleration over time |
| Amount of work done | Above | Weigh & combine the above three values to discern how intensively the machine has been utilized over time |

## FIG. 11B

25

Exemplary calculation methods for usage intensity factor ⟋1200

C. Type of Asset: **Complex**

| Name / Type of Asset | UI Parameter(s) | Usage Intensity (UI) Calculation Method |
|---|---|---|
| Rotary drilling top drive (e.g., for offshore drilling installation) | See below | Derive UI measures for each subsystem (e.g., see below) and combine |
| Gearbox (2 inputs, one output shaft) | Speeds of two input motors | Additional wear can be determined if the load on the two driving motors is different |
| Link tilt mechanism | # of times used | Wear from usage can be equated to number of operations |
| Retractable dolly mechanism | # of times used | Count & record number of operations |
| Gooseneck | Volume & pressure of mud flow-through | Total flow of mud from each mud pump selected for drilling. |
| Service Loop | Top drive movement up and down | Determine total distance travelled by top drive and number of direction changes up to down and down to up |

## FIG. 12

_1300_

Maintenance rescheduling

VM3 receives SSPA signals from VM1 &
receive UIFA signals from VM2 — _1310_

VM3 determines if SSPA detected TA operational degradation — _1320_

_1322_
Alert flag
from SSPA?

No → VM3 determines if UIFA
detected TA usage degradation — _1340_

_1342_
Delay flag
from UIFA?

No → Continue prior
maintenance
schedule — _1350_

Yes    _1324_

Escalate
Maintenance cycle

Yes    _1344_    _1360_

Extend
Maintenance
cycle.

Continue to use
SSPA,
to monitor TA,
as a safety net
to bring forward
maintenance if
TA shows signs
of operational
degradation

Dynamically
prioritize urgency
of failure warning — _1326_

_1328_
Advance
maintenance
schedules
accordingly

Implement "skip &
shift" process. — _1348_

_1330_

Update TA status & tracking modules.

Determine
management
effectiveness — _1390_

FIG. 13

27

FIG. 14

EP 3 483 803 A1

1595

| Liner size, inches (mm) | | | 9† (228.6) | 8 (203.2) | 7 ½ (190.5) | 7 (177.8) | 6 ½ (165.1) | 6 (152.4) | 5 ½ (139.7) | 5 (127.0) |
|---|---|---|---|---|---|---|---|---|---|---|
| Max. Discharge pressure, psi (kg/cm²) with high pressure fluid end | | | 2795 (196.5) | 3535 (248.6) | 4025 (283.0) | 4615 (324.5) | 5360 (376.8) | 6285 (441.9) | 7475 (525.5) | 7500 (527.3) |
| Speed spm | Input HP | Hyd. ** HP | GPM ** (LPM**) | GPM (LPM) | GPM (LPM) | GPM (LPM) | GPM (LPM) | GPM (LPM) | GPM (LPM) | GPM (LPM) |
| 105* | 2200* | 1980 | 1215 (4600) | 960 (3634) | 843 (3191) | 735 (2782) | 633 (2396) | 540 (2044) | 454 (1718) | 375 (1419) |
| 80 | 1676 | 1509 | 925 (3501) | 731 (2767) | 643 (2434) | 560 (2120) | 483 (1828) | 411 (1556) | 346 (1309) | 286 (1082) |
| 60 | 1257 | 1131 | 694 (2627) | 548 (2074) | 482 (1824) | 420 (1590) | 362 (1370) | 308 (1166) | 259 (980) | 214 (810) |
| 40 | 838 | 754 | 462 (1748) | 366 (1385) | 321 (1215) | 280 (1060) | 241 (912) | 206 (780) | 173 (654) | 143 (541) |
| Volume/Stroke, gal. (Liters) | | | 11.57 (43.797) | 9.14 (34.598) | 8.03 (30.397) | 7.00 (26.498) | 6.03 (22.826) | 5.14 (19.457) | 4.32 (16.353) | 3.57 (13.514) |

FIG. 15

1650

Scheduled preventative maintenance

Extended maintenance via UI-"skip and shift"

1660

Smart signal detected degradation [*] maintenance advanced

1670

PM1   PM2   PM3   PM4   PM5   PM6

PM4 skipped
Shift

PM6 skipped
Shift

Shift

PM1      PM2              PM3              PM5

* Shift

PM5*

## FIG. 16A

1600

Example: skip & shift methodology

Use VM3 to receive signal to postpone/extend TA maintenance schedule        1604

Employ Zonal UI analytics [e.g., see FIG.17] to determine how far maintenance can be extended        1610

1620

Shift out (extend) scheduled maintenance through time (which may allow some tasks to be skipped).

1630

Use VM3 to update status & tracking data

## FIG. 16B

Exemplary skip & shift Methodology parameters

1700

1730

1720    1710

| Asset | Zonal UI analytics | Predictive maintenance modeling |
|---|---|---|
| Hydraulic activated valve | Number of valve operations | Operation time – slower operation represents potential failure |
| Electric motor | Power Acceleration Number of rotations | Bearing temperatures Winding temperatures Vibration Lube temperatures |
| Mud pump | Power Acceleration Number of rotations Number of strokes Valve status Pressure | Motor bearing temperatures Winding temperatures Pump bearing temperatures Vibration Lube temperatures Pump outlet pressure Pump outlet temperature |

FIG. 17

1800

Management effectiveness analytics

1814

From calendar
maintenance schedules

1812

From SSPA

1816

From UIPA

1820

Analyse data each task completed (on the TA) to ascertain how effective the
maintenance was, by looking at changes in key parameters such as
temperature

1840

Combine
zonal
analytics
(SSPA ,
UPIA) and
MER
analytics to
enhance data
driven
maintenance

1832

Assign each task completed
overall maintenance effectiveness
rating ("MER")

1834

Continuously
monitor MER
data

1836

Store history of
MER changes

1850

Feedback MER data into
maintenance scheduling
system to allow continuous
system learning and
improved modelling

1860

Update TA's
maintenance
dashboard

FIG. 18

Analytics combinations to drive data driven maintenance schedules  1930  1932

1910

1920

**Zonal analytics**

**Digital twin analytics**

**Maintenance Effectiveness analytics**

1922

UI based maintenance extension estimates

Is the equipment digital twin indicating degradation and if so, how fast ?

Before -and-after analysis to help make decisions on expected MER

1912

Usage intensity analysis

Simulation based modelling analysis

History data analysis

1924

1934

1914

(A)

# FIG. 19A

(A)

1950

**Business case - Predictive maintenance - Analytics foundations**
Analytics combinations to drive data maintenance schedules

XXX... XXX... XXX... XXX... XXX...

**1**
**Maintenance effectiveness analytics**
Before-and-after analysis -to help make decisions on expected maintenance effectiveness

**2**
**Zonal analytics**
Usage intensity based maintenance extension estimates

**3**
**Digital twin analytics**
Is the equipment digital twin indicating degradation in reliability and if so, how fast?

**Historical data analysis**
- Run asset historical data through SSI
- Superimpose the maintenance intervals over the data
- Analyse the sensor data before and after each maintenance interval
- Assess the effectiveness of each maintenance activity
- Agree the maintenance activities that can be "skip"ped as the maintenance has not been effective in changing the assets health

**Usage intensity analysis**
- Number of revolutions
- Total power transmission
- Acceleration stress
- Maintenance extension -calibration
- Operational counts and pressure tests
- Link/Tilt and elevators

Similarity based modelling analysis

## FIG. 19B

Europäisches
Patentamt

European
Patent Office

Office européen
des brevets

# EUROPEAN SEARCH REPORT

Application Number

EP 18 19 3719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/143956 A1 (LONG WAYNE R [US] ET AL) 30 June 2005 (2005-06-30) * paragraphs [0002] - [0033] * * paragraphs [0081] - [0182] * * abstract; figures 1-3, 11 * | 1-15 | INV. G06Q10/04 G06Q50/02 G06Q10/06 |
| X | US 2002/143421 A1 (WETZER MICHAEL [US]) 3 October 2002 (2002-10-03) * abstract; figures 1, 5, 8-12 * * paragraphs [0026] - [0038] * * paragraphs [0053] - [0055] * | 1-15 | |
| X | US 2011/071963 A1 (PIOVESAN CAROL M [US] ET AL) 24 March 2011 (2011-03-24) * abstract; figures 1A-2B, 4C * * paragraphs [0013] - [0018] * * paragraphs [0039] - [0058] * * paragraphs [0067] - [0076] * | 1-15 | |
| X | US 2016/292652 A1 (BOWDEN JR LARRY A [US] ET AL) 6 October 2016 (2016-10-06) * abstract; figures 1,2,7,8 * * paragraphs [0007] - [0011] * * paragraphs [0024] - [0043] * * paragraphs [0058] - [0060] * | 1-15 | TECHNICAL FIELDS SEARCHED (IPC) G06Q |
| X | EP 1 589 391 A2 (GEN ELECTRIC [US]) 26 October 2005 (2005-10-26) * paragraphs [0008] - [0036] * * abstract; figures 1-5 * | 1-15 | |

The present search report has been drawn up for all claims

| Place of search | Date of completion of the search | Examiner |
|---|---|---|
| Munich | 28 March 2019 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 3719

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2019

| Patent document cited in search report | | Publication date | Patent family member(s) | | Publication date |
|---|---|---|---|---|---|
| US 2005143956 | A1 | 30-06-2005 | AU | 2004281482 A1 | 28-04-2005 |
| | | | BR | PI0415352 A | 12-12-2006 |
| | | | CA | 2540336 A1 | 28-04-2005 |
| | | | EA | 200600784 A1 | 27-02-2007 |
| | | | EP | 1673722 A2 | 28-06-2006 |
| | | | HK | 1099106 A1 | 07-12-2012 |
| | | | KR | 20060105748 A | 11-10-2006 |
| | | | US | 2005143956 A1 | 30-06-2005 |
| | | | WO | 2005038613 A2 | 28-04-2005 |
| US 2002143421 | A1 | 03-10-2002 | AU | 2002248704 A1 | 21-10-2002 |
| | | | CA | 2443648 A1 | 17-10-2002 |
| | | | EP | 1386277 A2 | 04-02-2004 |
| | | | US | 2002143421 A1 | 03-10-2002 |
| | | | WO | 02082710 A2 | 17-10-2002 |
| US 2011071963 | A1 | 24-03-2011 | US | 2011071963 A1 | 24-03-2011 |
| | | | WO | 2011035151 A2 | 24-03-2011 |
| US 2016292652 | A1 | 06-10-2016 | AU | 2016243935 A1 | 24-08-2017 |
| | | | US | 2016292652 A1 | 06-10-2016 |
| | | | WO | 2016161263 A1 | 06-10-2016 |
| EP 1589391 | A2 | 26-10-2005 | CN | 1690685 A | 02-11-2005 |
| | | | EP | 1589391 A2 | 26-10-2005 |
| | | | JP | 5295482 B2 | 18-09-2013 |
| | | | JP | 2005317002 A | 10-11-2005 |
| | | | US | 2005240289 A1 | 27-10-2005 |
| | | | US | 2010114810 A1 | 06-05-2010 |

EPO FORM P0459

For more details about this annex : see Official Journal of the European Patent Office, No. 12/82